(19) Europäisches Patentamt
European Patent Office
Office européen des brevets

(11) Publication number: 0 005 824 B1

(12) **EUROPEAN PATENT SPECIFICATION**

(45) Date of publication of patent specification: 26.05.82

(51) Int. Cl.³: C 08 F 4/64, C 08 F 4/02, C 08 F 10/00

(21) Application number: 79101644.7

(22) Date of filing: 29.05.79

(54) **Catalysts for stereospecifically polymerizing olefins and process for preparing same.**

(30) Priority: 29.05.78 IT 2392578
13.11.78 IT 2970878

(43) Date of publication of application:
12.12.79 Bulletin 79/25

(45) Publication of the grant of the patent:
26.05.82 Bulletin 82/21

(84) Designated Contracting States:
BE DE FR GB IT NL

(56) References cited:
GB - A - 815 805
GB - A - 877 457
GB - A - 898 631
US - A - 2 989 516
US - A - 3 058 970
US - A - 3 825 524

(73) Proprietor: Montedison S.p.A.
Patents & Licensing Dept. Foro Buonaparte, 31
I-20121 Milan (IT)

(72) Inventor: Caldo, Cornelio, Dr.
3, Via Giosuè Borsi
Terni (IT)
Inventor: Basili, Luigi
12, Via Gibilrossa
Terni (IT)

(74) Representative: Zumstein, sen., Fritz, Dr. Dr. F. Zumstein sen., Dr. E. Assmann Dr. R. Koenigsberger et al,
Dipl.-Ing. F. Klingseisen Dr. F. Zumstein jun.
Bräuhausstrasse 4
D-8000 München 2 (DE)

EP 0 005 824 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Catalysts for stereospecifically polymerizing olefins and process for preparing same

This invention relates to catalysts for stereospecifically polymerizing olefins, useful to obtain highly isotactic polymers, and to a process for preparing same.

Such catalysts substantially consist of $TiCl_3$, obtained by reduction of $TiCl_4$.

The characteristics of $TiCl_3$, in the crystalline delta form, suited to polymerize propylene, have been described by C. W. Hock in J. Polymer Sci., 4, 3055 (1966).

Hercules's US—A—3,058,970 (priority date: April 27, 1957), claims a process for preparing $TiCl_3$, suited to polymerize olefins, consisting in reducing $TiCl_4$ to $TiCl_3$ with aluminium-organic compounds, at temperatures ranging from −20°C to +15°C, in activating the resulting $TiCl_3$ by means of heating to 40°—150°C and optional treatment with an aluminium-organic compound.

At the conclusion of the reduction, $TiCl_3$ binds $AlCl_3$ in the ratio of about 3:1 by moles.

Mitsui Petrochemical's US—A—3,825,524 (priority date: October 2, 1970) has successively claimed a process for preparing $TiCl_3$ useful to polymerize olefins, consisting in reducing $TiCl_4$ to $TiCl_3$ with aluminium-organic compounds, and in activating the obtained $TiCl_3$ by means of heating, in a hydrocarbon solvent, in the presence of an organic electron-donor compound, having the function of complexing the $AlCl_3$ that has formed during the reduction, and of removing it, at least partially, in a soluble state.

The complexing agents claimed by Mitsui include ethers, thioethers, acids, phenols, ketones, aldehydes and many other organic compounds.

Solvay's FR—A—2,130,231 (priority dates: March 23, 1971; August 17, 1971; October 8, 1971) finally claims a process for preparing $TiCl_3$, suited to polymerize olefins, consisting in reducing $TiCl_4$ to $TiCl_3$ with metals or aluminium-organic compounds, in preactivating, by heating, the $TiCl_3$ obtained (in the beta crystalline form), in activating the catalyst by means of hot complexing, in a hydrocarbon solvent, with an organic electron-donor compound, adding also $TiCl_4$, which has the function of stabilizing the catalyst morphology.

The complexing agents claimed in the Solvay's patents are organic compounds belonging to the classes of the ethers, thioethers, mercaptans, primary, secondary and tertiary amines, and other organic compounds.

In case the complexing agents are ethers, they are of the same type as those included in the prior Mitsui patent.

To stabilize the morphology of the catalyst, besides $TiCl_4$ also $SiCl_4$, $CCl_4$ (Mitsubishi's patents: GB—A—1,282,897, JP—A—72-06409, 73-17886, 76-32493) and also $TiBr_4$ have been utilized.

US—A—2 989 516 describes a catalyst for the polymerisation of olefins prepared by impregnating a suitable carrier with titanium tetra-chloride and then reducing the tetra-chloride to a sub-chloride. The suitable carriers include Kieselguhr. The reduction can be accomplished by dissolving an organo-metallic compound in a saturated hydrocarbon containing the catalyst dispersion. This US Patent, however, fails to point at the importance of a silica content higher than 50% by weight of the carrier and of the relatively low amount of the carrier in comparison with $TiCl_4$.

The same applies to GB—A—877 457. This patent discloses a catalyst component based on $TiCl_3$ which is obtained by reacting at room temperature an aluminium alkyl compound with $TiCl_4$ dissolved in an inert hydrocarbon solvent containing in dispersion a siliceous pulverized material.

The Applicant has now found a process for preparing a solid catalyst component based on titanium trichloride, useful to stereospecifically polymerize olefins, comprising the following steps:

a) preparing a suspension of finely dispersed siliceous material of the diatomite type (diatomaceous earth) in a mixture of an inert hydrocarbon solvent and of $TiCl_4$;

b) reducing $TiCl_4$ in said mixture to $TiCl_3$ by means of aluminium-organic compounds, in particular with aluminium triethyl-sesquichloride, at temperatures ranging from −20°C to +20°C; whereby a catalytic compound forms, which corresponds to general formula $TiCl_3 \cdot 1/3\ AlCl_3$, physically bound to diatomite;

c) washing the solid catalytic component so obtained with a hydrocarbon solvent, filtering and drying the same, and characterized in that a diatomite having a silica content higher than 50% by weight is employed at the rate of 2—100 g/gram-molecule of $TiCl_4$.

To improve the performances of the catalyst component in the polymerization of the olefins, the catalyst component obtained as described hereinbefore is preferably subjected to a heat treatment at 40°—150°C for a time ranging from 10 minutes to 5 hours, preferably from 30 to 60 minutes.

A preferred embodiment of our invention comprises the further step:

d) carrying out an activation step, at 40°—150°C in the presence of a complexing agents consisting of an aliphatic or aromatic ether, and removing, by means of washings with hydrocarbon solvents, the $AlCl_3$ that has been transformed into a soluble form by complexing.

The diatomite utilized according to the present invention is a natural product consisting of a type of silica of organic origin, of micro-organisms of the diatom type. Such product is known under various commercial names such as fossil meal, kieselguhr, etc.

It has a high silica content, generally exceeding 80% by weight, and includes, as most usual components: alumina, iron oxide, titanium oxide, calcium oxide, magnesium oxide and alkali.

Likewise useful are diatomites with a silica content below 80%, like those having a content ranging from 50% to 80% by weight.

The above-mentioned material is characterized by an apparent density of the order of 0.2 g/cm$^3$ and by a microporous structure of the granules, which exhibit a formation typical of the spongy or dendrite type.

The products known under the commercial name of Celite® (trade-mark of Johns-Manville Corp.) have proved particularly suited.

In the following examples a Celite® of the type "Superfine Superfloss", having the following composition in % by weight:—

| | |
|---|---|
| — silica | 91.9 |
| — alumina | 3.3 |
| — iron oxide | 1.3 |
| — titanium oxide | 0.3 |
| — calcium oxide | 0.5 |
| — magnesium oxide | 0.5 |
| — alkali | 2.0 |

and an apparent density of 0.2 g/cm$^3$, has been used.

This product has been employed at the rate of 2—100 g per gram mole of $TiCl_4$.

The catalyst components containing diatomite, prepared according to the present invention, not subjected to ether treatment, have the following molar composition: $TiCl_3 . 1/3\ AlCl_3$ fixed on diatomite in an amount equal to 2—100 g/mole of $TiCl_3$.

The porosity of such components is higher than 0.05 cm$^3$/g and the surface area ranges from 20 to 100 m$^2$/g.

The X-ray diffraction spectrum exhibits the characteristic lines of the beta form of $TiCl_3$ for the product obtained from the reduction and of the delta form for the product successively subjected to heat treatment, and a very intense line, at 4.13 Å, typical of diatomite.

The preferred catalyst components according to our invention are those obtained through the optional activation step 4.

Ethers suitable as complexing agent for $AlCl_3$ in this step 4, are in particular the aliphatic ethers R—O—R' wherein R and R' like or unlike each other, are methyl, ethyl, n-propyl, isopropyl, n-butyl, sec.-butyl, t-butyl, n-amyl and isoamyl which have proved to be particularly suited as ethers to be utilized as complexing agents of $AlCl_3$, according to this invention.

The ether amount to be employed for 100 g of raw catalyst (consisting of the reduction product of $TiCl_4$ supported on diatomite) ranges from 20 to 200 g. Generally the ether is mixed with a hydrocarbon solvent: in particular hexane, heptane, octane, toluene and xylene. It is employed either at atmospheric pressure or under pressure.

The catalyst components subjected to ether treatment according to the present invention, have the following molar composition:

$$TiCl_3 . (AlCl_3)_{0.005-0.2} . (ether)_{0.01-0.3}$$

especially

$$TiCl_3 . (AlCl_3)_{0.05-0.2} . (ether)_{0.01-0.3},$$

and are supported on diatomite in an amount equal to 2—100 g/mole of $TiCl_3$.

The porosity of such catalysts is higher than 0.10 cm$^3$/g and the surface area ranges from 50 to 150 m$^2$/g.

In the X-ray diffraction spectrum it is possible to observe the typical lines of the delta form of $TiCl_3$ and a very intense line, at 4.13 Å, characteristic of the support diatomite.

The catalytic components prepared according to this invention are utilized in the stereospecific polymerization and copolymerization of the olefins, along with cocatalysts preferably consisting of aluminium-organic compounds, such as aluminium triethyl, aluminium triisobutyl, aluminium diethyl-monochloride and the like, optionally complexed with electron-donor compounds, especially with organic esters.

The polymers, which are obtained with high yields, possess a high isotacticity index a good apparent density, a narrow granulometric distribution, particularly in the range of average diameters of the flakes comprised between 150 and 850 microns, and furthermore they easily absorb liquid additives due to their high porosity.

This permits to obtain free-flowing powders containing relatively high amounts of liquid additives.

Such polymers, furthermore, are suitable for being used in the extrusion coating on plastic films.

It was ascertained, moreover, that the catalysts prepared according to this invention permit, in comparison with the catalysts for flakes obtained by reducing $TiCl_4$ with Al-alkyls and non-supported,

an easier purification of the polymer from the catalytic residues also in the processes which utilize low-boiling alcohols (methanol) for the purification.

Wide modifications and changes may be brought to this invention when practising it, without departing from its spirit and its objects.

The following examples are given to illustrate this invention, without being however a limitation thereof.

Example 1

— 1,250 $cm^3$ of dearomatised n-heptane
— 490.2 g of titanium tetrachloride
— 55 g of diatomite "Celite"

were introduced into a stainless steel 5-liter autoclave, in a nitrogen atmosphere.

It was stirred two hours at room temperature.

It was cooled down to 8—10°C. 372.9 g of aluminium triethylsesquichloride (reducing agent) were then added, maintaining the temperature at 8—10°C for 120 minutes.

The resulting product was filtered, washed with n-heptane and dried. It exhibited the following characteristics:

Composition resulting from the analysis:

$$TiCl_3 . 1/3\ AlCl_3 . (diatomite)_{65\ g}.$$

Surface area: 21.1 $m^2/g$;
Porosity: 0.062 $cm^3/g$;
Shape of the pores: cylindrical (micropores).
On X-ray analysis, the prevailing crystalline form resulted to be the beta form.

Polymerization test 1

— 50 l of dearomatised n-heptane,
— 18 g of the catalyst component prepared as described hereinbefore,
— 860 g of aluminium-diethylmonochloride in a 10% heptane solution

were introduced into a stainless steel 200-liter autoclave.

After heating to 70°C, propylene was introduced for 3 hours till reaching an amount of 60 l.

The unreacted propylene was then degassed.

It was cooled down and the catalytic complex was decomposed by addition of 2 liters of n-butyl alcohol.

It was heated to 100°C for 1 hour. After cooling, the slurry was transferred into a 400-liter reactor, 50 l of water and 2 g of surfactant were added thereto, finally it was distilled in a vapour stream to remove the solvent.

The suspension was centrifuged and then dried at 60°C 18.9 kg of a polymer having the following characteristics were obtained:

| | |
|---|---|
| — residue to the extraction with heptane | 72.5% |
| — apparent density | 0.26 $g/cm^3$ |
| — granulometry: | |
| >840 microns | 34% |
| from 420 to 840 microns | 38% |
| from 250 to 420 microns | 20% |
| from 177 to 250 microns | 6% |
| from 149 to 177 microns | 1% |
| from 74 to 149 microns | 1% |
| <74 microns | 0%. |

Polymerization test 2

— 50 l of dearomatised n-heptane,
— 11 g of catalyst component, prepared as described hereinbefore,
— 860 g of aluminium-diethylmonochloride in a 10% heptane solution

were introduced into a stainless steel 200-l autoclave.

After heating to 70°C, propylene was introduced for 3 hours up to an amount of 60 l, whereupon the unreacted propylene was degassed.

After cooling, the catalytic complex was decomposed by addition of 2 l of n-butyl alcohol.

It was heated to 100°C for 1 hour. It was cooled down, the slurry was transferred into a 400-l reactor, 50 l of water and 2 g of surfactant were added thereto, finally it was distilled in a vapor stream to remove the solvent.

The suspension was centrifuged and then dried at 60°C. 18.7 kg of a polymer having the following characteristics were obtained:

| | |
|---|---|
| — residue to the extraction with heptane | 72.9% |
| — apparent density | 0.28 g/cm$^3$ |
| — granulometry: | |
| >840 microns | 9.0% |
| from 420 to 840 microns | 75.0% |
| from 250 to 420 microns | 15.0% |
| from 177 to 250 microns | 1.0% |
| from 149 to 177 microns | 0% |
| from 74 to 149 microns | 0% |
| <74 microns | 0%. |

Polymerization tests 3

— 50 liters of dearomatised n-heptane,
— 16 grams of a reduced and non-supported catalyst, prepared according to US patent 3,058,970 (Hercules),
— 860 grams of aluminium-diethylmonochloride in a 10% heptane solution

were introduced into a stainless steel 200-liter autoclave.

After heating to 70°C, propylene was introduced in 3 hours up to an amount of 60 l. The unreacted propylene was then degassed.

It was cooled down and the catalytic complex was decomposed by addition of 2 liters of n-butyl alcohol.

It was heated to 100°C for 1 hour. After cooling, the slurry was transferred into a 400-liter reactor, 50 l of water and 2 g of surfactant were added thereto, finally it was distilled in a vapour stream to remove the solvent. The suspension was centrifuged and then dried at 60°C. 14.2 Kg of polymer were thus obtained.

Example 2

— 1,250 cm$^3$ of dearomatised n-heptane,
— 490.2 g of titanium tetrachloride,
— 55 g of diatomite "Celite"

were introduced into a stainless steel 5-liter autoclave, in a nitrogen atmosphere.

It was stirred 2 hours at room temperature.

It was cooled down to 8—10°C. 372.9 g of aluminium-triethylsesquichloride were then added thereto, maintaining a temperature of 8—10°C for 120 minutes.

The resulting supported complex $(TiCl_3)_3 . AlCl_3$ was preactivated by heating to 120°C for 30 minutes.

The product so obtained was filtered, washed with n-heptane and dried. It exhibited the following characteristics:

Composition resulting on analysis:

$$TiCl_3 . 1/3\ AlCl_3 . (diatomite)_{65\ g}.$$

Surface area: 96.1 m$^2$/g
Porosity: 0.120 cm$^3$/g
Shape of the pores: slit like.
On X-ray analysis, the prevailing crystalline form was the delta form.

Polymerization test 1

— 50 liter of dearomatised n-heptane,
— 18.5 grams of the above-obtained catalyst component,
— 860 grams of aluminium-diethylmonochloride in a 10% heptane solution

were introduced into a stainless steel 200-liter autoclave.

After heating to 70°C, propylene in an amount of 60 l was introduced in 3 hours. The unreacted propylene was then degassed. After cooling, the catalytic complex was decomposed by addition of 2 liters of n-butyl alcohol.

It was heated to 100°C for 1 hour. It was cooled down, the slurry was transferred into a 400-liter reactor, 50 liter of water and 2 grams of surfactant were added, finally it was distilled in a vapour stream to remove the solvent. The suspension was centrifuged and then dried at 60°C. 30.21 kg of a polymer having the following characteristics were obtained:

| | |
|---|---|
| — residue to the extraction with heptane | 84.7% |
| — apparent density: | 0.33 g/cm³ |
| — granulometry: | |
| >840 microns | 2.5% |
| from 420 to 840 microns | 3.5% |
| from 250 to 420 microns | 50% |
| from 177 to 250 microns | 20% |
| from 149 to 177 microns | 3% |
| from 74 to 149 microns | 8% |
| <74 microns | 3.5%. |

Polymerization test 2

— 50 liters of dearomatised n-heptane,
— 9 grams of the catalyst component,
— 860 grams of aluminium-diethylmonochloride in a 10% heptane solution

were introduced into a stainless steel 200-l autoclave.

After heating to 70°C, 60 l of propylene were introduced in 3 hours. The unreacted propylene was then degassed.

It was cooled and the catalytic complex was decomposed by addition of 2 liters of n-butyl alcohol.

It was heated to 100°C for 1 hour, then it was cooled, the slurry was transferred into a 400-liter reactor, 50 l of water and 2 g of surfactant were added, finally it was distilled in a vapour stream to remove the solvent.

The suspension was centrifuged and then dried at 60°C. 22.23 kg of a polymer having the following characteristics were obtained:

| | |
|---|---|
| — residue to the extraction with heptane | 82% |
| — apparent density | 0.28 g/cm³ |
| — granulometry: | |
| >840 microns | 1.0% |
| from 420 to 840 microns | 0.4% |
| from 250 to 420 microns | 50.0% |
| from 177 to 250 microns | 34.0% |
| from 149 to 177 microns | 7.0% |
| from 74 to 149 microns | 6.0% |
| <74 microns | 1.6%. |

Polymerization test 3

— 50 liters of dearomatised n-heptane,
— 17.5 grams of a reduced and non-supported catalyst, preactivated by a two-hour heating to 135°C, according to Hercules's US patent 3,058,970,
— 860 grams of aluminium-diethylmonochloride in a 10% heptane solution

were introduced into a stainless steel 200-liter autoclave.

It was heated to 70°C and 60 liters of propylene were introduced in 3 hours. The unreacted propylene was then degassed.

After cooling, the catalytic complex was decomposed by addition of 2 liters of n-butyl alcohol.

It was heated to 100°C for 1 hour. After cooling, the slurry was transferred into a 400-liter reactor, 50 liters of water and 2 grams of surfactant were added, finally it was distilled in a vapour stream to remove the solvent.

The suspension was centrifuged and then dried at 60°C.

22.6 kg of a polymer having the following characteristics were obtained:

| | |
|---|---|
| — residue to the extraction with heptane | 84.0% |
| — apparent density | 0.49 g/cm³ |
| — granulometry: | |
| >840 microns | 0.38% |
| from 420 to 840 microns | 10.5% |
| from 250 to 420 microns | 53.2% |
| from 177 to 250 microns | 29.2% |
| from 149 to 177 microns | 3.7% |
| from 74 to 149 microns | 2.9% |
| <74 microns | 0.2%. |

Example 3

— 1,250 $cm^3$ of dearomatised n-heptane,
— 438.6 g of titanium tetrachloride,
— 110 g of diatomite "Celite"

were introduced into a stainless steel 5-liter autoclave, in a nitrogen atmosphere.

It was stirred 2 hours at room temperature.

It was cooled down to 8—10°C. Successsively, 435.1 g of aluminium-triethylsesquichloride were added, keeping a temperature of 8—10°C for 120 minutes.

The resulting product was filtered, washed with n-heptane and dried. It exhibited the following characteristics:

Composition revealed on analysis:

$$TiCl_3 . 1/3\ AlCl_3 . (diatomite)_{143\ g}.$$

Surface area: 67.5 $m^2/g$
Porosity: 0.092 $cm^3/g$
Shape of the pores: cylindrical (micropores).
On X-ray analysis, the prevailing crystalline form was the beta form.

Polymerization test

— 50 liters of dearomatised n-heptane,
— 14.7 grams of the catalyst component as obtained hereinbefore,
— 860 grams of aluminium-diethylmonochloride in a 10% heptane solution

were introduced into a stainless steel 200-liter autoclave.

After heating to 70°C, 60 liters of propylene were introduced in 3 hours. The unreacted propylene was then degassed.

It was cooled down and the catalytic complex was decomposed by addition of 2 liters of n-butyl alcohol.

It was heated to 100°C for 1 hour. After cooling, the slurry was transferred into a 400-liter reactor, 50 liters of water and 2 grams of surfactant were added, whereupon it was distilled in a vapour stream to remove the solvent.

The suspension was centrifuged and then dried at 60°C.

17.7 kg of a polymer having the following characteristics were obtained:

| | |
|---|---|
| — residue to the extraction with heptane: | 69% |
| — apparent density: | 0.28 $g/cm^3$ |
| — granulometry: | |
| >840 microns | 2.0% |
| from 420 to 840 microns | 45.0% |
| from 250 to 420 microns | 44.7% |
| from 177 to 250 microns | 4.0% |
| from 149 to 177 microns | 2.8% |
| from 74 to 149 microns | 1.5% |
| <74 microns | 0% |

Example 4

— 1,250 $cm^3$ of dearomatised n-heptane,
— 464.4 g of titanium tetrachloride,
— 82.5 g of diatomite "Celite"

were introduced into a stainless steel 5-liter autoclave.

It was stirred two hours, at room temperature.

It was cooled to 8—10°C. 353.0 g of aluminium-triethylsesquchloride were then added, keeping the temperature of 8—10°C for 120 minutes.

The resulting product was filtered, washed with n-heptane and dried. It exhibited the following characteristics:

Composition on analysis:

$$TiCl_3 . 1/3\ AlCl_3 . (diatomite)_{101\ g}.$$

Surface area: 81.8 $m^2/g$
Porosity: 0.127 $cm^3/g$
Shape of the pores: cylindrical (micropores).
On X-ray analysis, the prevailing crystalline form was the beta form.

Polymerization test
— 50 liters of dearomatised n-heptane,
— 16.5 grams of the catalytic component prepared hereinbefore,
— 860 grams of aluminium-diethylmonochloride in a 10% heptane solution

were introduced into a stainless steel 200-liter autoclave.

It was heated to 70°C and 60 liters of propylene were introduced in 3 hours. The unreacted propylene was then degassed.

After cooling down, the catalytic complex was decomposed by addition of 2 liters of n-butyl alcohol.

It was heated to 100°C for 1 hour. After cooling, the slurry was transferred into a 400-liter reactor, 50 liters of water and 2 grams of surfactant were then added, finally it was distilled in a vapour stream to remove the solvent.

The suspension was centrifuged and then dried at 60°C.

19.5 kg of a polymer having the following characteristics were obtained:

| | |
|---|---|
| — residue to the extraction with heptane | 66% |
| — apparent density | 0.29 g/cm$^3$ |
| — granulometry: | |
| >840 microns | 1.5% |
| from 420 to 840 microns | 12.0% |
| from 250 to 420 microns | 68.0% |
| from 177 to 250 microns | 5.0% |
| from 149 to 177 microns | 11.2% |
| from 74 to 149 microns | 2.3% |
| <74 microns | 0% |

Example 5
— 1,250 cm$^3$ of dearomatized n-heptane
— 524.5 g of titanium tetrachloride
— 27.5 g of diatomite "Celite"

were introduced, in a nitrogen atmosphere, into a stainless steel 5-liter autoclave.

Stirring was conducted for 2 hours, at room temperature.

It was cooled down to 8°—10°C. Successively 397.8 g of aluminium-triethylsesquichloride were added thereto, keeping a temperature of 8°—10°C for 120 minutes.

The resulting supported complex $TiCl_3 . 1/3\ AlCl_3$ was preactivated by heating to 120°C for 30 minutes.

The n-heptane was removed by decantation, whereupon the complex was diluted with 1250 cm$^3$ of dearomatized n-heptane.

358.4 g of n-butyl ether (complexing agent) were added, then it was heated to 120°C for 30 minutes, to complete the activation of the catalyst.

The product obtained was filtered, washed with n-heptane and dried. It exhibited the following characteristics:

Composition revealed on analysis:

$$TiCl_3 . (AlCl_3)_{0.13} . (\text{n-butyl ether})_{0.11} . (\text{diatomite})_{10.8\ g}.$$

The surface area was of 78.3 m$^2$/g, the porosity was 0.1710 cm$^3$/g.

Polymerization test
— 50 l of dearomatized n-heptane
— 17.6 g of the catalyst
— 860 g of aluminium diethyl-monochloride in a 10% heptane solution

were introduced into a stainless steel 200-liter autoclave.

It was heated to 70°C and 50 l of propylene were introduced during 3 hours, whereupon the unreacted propylene was vented to the atmosphere.

It was cooled down and the catalytic complex was decomposed by addition of 2 l of n-butyl alcohol.

It was heated 1 hour to 100°C. After cooling, the slurry was transferred to a 400-l reactor, 50 l of water and 2 g of surfactant were added thereto, finally it was distilled in a vapour stream to remove the solvent.

The suspension was centrifuged and dried at 60°C.

28 kg of polymer having the following characteristics were obtained:

| | |
|---|---|
| residue to the extraction with heptane | =94.4% |
| apparent density | =0.44 g/cm$^3$ |
| granulometric analaysis: | |
| above 840 $\mu$ | 0.5% |
| from 420 to 840 $\mu$ | 24.8% |
| from 250 to 420 $\mu$ | 55.6% |
| from 177 to 250 $\mu$ | 16.1% |
| from 149 to 177 $\mu$ | 0.3% |
| from 74 to 149 $\mu$ | 2.7% |
| below 74 $\mu$ | 0.0% |

Example 6

— 1,250 cm$^3$ of dearomatized n-heptane
— 490.2 g of titanium tetrachloride
— 55 g of diatomite "Celite"

were introduced into a stainless steel 5-liter autoclave, in a nitrogen atmosphere.

It was stirred 2 hours at room temperature.

It was cooled down to 8°—10°C. 372.9 g of aluminium triethylsesquichloride were then added, maintaining the temperature at 8°—10°C for 120 minutes.

The n-heptane was removed by decantation and the complex was diluted with 1,250 cm$^3$ of dearomatized n-heptane.

334.9 g of n-butyl ether were added thereto and it was heated to 120°C for 30 minutes, in order to complete the activation of the catalyst.

The product obtained was filtered, washed with n-heptane and dried.

It exhibited the following characteristics:

Composition revealed on analysis:

$$TiCl_3 \cdot (AlCl_3)_{0.15} \cdot (\text{n-butyl ether})_{0.10} \cdot (\text{diatomite})_{21.3\ g}.$$

The porosity was of 0.1120 cm$^3$/g and the surface area of 92.6 m$^2$/g.

Polymerization test

— 50 l of dearomatized n-heptane
— 19.7 g of the catalyst
— 860 g of aluminium diethyl-monochloride in a 10% heptane solution

were introduced into a stainless steel 200-liter autoclave.

It was heated to 70°C and 50 l of propylene were introduced during 3 hours. Unreacted propylene was then vented to the atmosphere.

It was cooled and the catalytic complex was decomposed by addition of 2 l of n-butyl alcohol.

It was heated to 100°C for 1 hour. After cooling, the slurry was transferred to a 400-liter reactor, 50 l of water and 2 g of surfactant were added, finally it was distilled in a vapour stream to remove the solvent.

The suspension was centrifuged and dried at 60°C.

27.2 kg of a polymer having the following characteristics were so obtained:

| | |
|---|---|
| residue to the extraction with heptane | =94.7% |
| apparent density | =0.46 g/cm$^3$ |
| granulometric analysis: | |
| above 840 $\mu$ | 4.5% |
| from 420 to 840 $\mu$ | 6.8% |
| from 250 to 420 $\mu$ | 50.4% |
| from 177 to 250 $\mu$ | 20.0% |
| from 149 to 177 $\mu$ | 8.3% |
| from 74 to 149 $\mu$ | 7.5% |
| below 74 $\mu$ | 2.5% |

Example 7

— 1,250 cm$^3$ of dearomatized n-heptane
— 438.6 g of titanium tetrachloride
— 100 g of diatomite "Celite"

were introduced into a stainless steel 5-liter autoclave, in a nitrogen atmosphere.

It was stirred 2 hours at room temperature.

It was cooled down to 8°—10°C. 325.1 g of aluminium triethylsesquichloride were then added, maintaining the temperature at 8°—10°C for 120 minutes.

The resulting supported complex $TiCl_3 . 1/3\ AlCl_3$ was preactivated by heating to 120°C for 30 minutes.

The n-heptane was removed by decantation, and the complex was diluted with 1,250 $cm^3$ of dearomatized n-heptane.

299.7 g of n-butyl ether were added and it was heated to 120°C for 30 minutes, in order to complete the activation of the catalyst.

The product obtained was filtered, washed with n-heptane and dried.

It exhibited the following characteristics:

Composition revealed on analysis:

$$TiCl_3 . (AlCl_3)_{0.13} . (\text{n-butyl ether})_{0.12} . (\text{diatomite})_{47.6\ g}$$

Surface area: 73 $m^2/g$

Porosity: 0.158 $cm^3/g$.

The X-ray diffraction spectrum is recorded on the following Table.

X-ray diffraction spectrum

| Lines corresponding to lattice planes (Å) | 6.10 | 5.35 | 5.15 | 4.13 | 2.75 | 1.77 | 1.69 |
|---|---|---|---|---|---|---|---|
| Intensity (integrated) of the lines | f | mf | m | f | f | mf | d |
| Intensity (maximum) of the lines | f | m | md | ff | f | f | d |
| Width of the lines (2$\theta$) | 0.80 | 0.40 | 1.40 | 1.20 | 3.50 | 1.10 | 1.00 |

ff=very strong
f=strong
mf=medium strong
m=medium
md=medium weak
d=weak

Polymerization test

— 50 l of dearomitized n-heptane
— 15.2 g of the catalyst
— 860 g of aluminium diethyl-monochloride in a 10% heptane solution

were introduced into a stainless steel 200-liter autoclave.

After heating to 70°C, 50 liters of propylene were introduced in 3 hours. The unreacted propylene was then vented to the atmosphere.

It was cooled down and the catalytic complex was decomposed by addition of 2 liters of n-butyl alcohol.

It was heated to 100°C for 1 hour. It was cooled down, the slurry was transferred to a 400-liter reactor, 50 l of water and 2 g of surfactant were added, whereupon it was distilled in a vapour stream to remove the solvent.

The suspension was centrifuged and dried at 60°C.

27.4 kg of a polymer having the following characteristics were obtained:

| | |
|---|---|
| residue to the extraction with heptane | =94.9% |
| apparent density | =0.48 g/$cm^3$ |
| granulometric analysis: | |
| above 840 $\mu$ | 4.4% |
| from 420 to 840 $\mu$ | 23.0% |
| from 250 to 420 $\mu$ | 55.4% |
| from 177 to 250 $\mu$ | 8.5% |
| from 149 to 177 $\mu$ | 3.2% |
| from 74 to 149 $\mu$ | 5.5% |
| below 74 $\mu$ | 0.0% |

Example 8

— 1,250 $cm^3$ of dearomatized n-heptane

— 438.6 g of titanium tetrachloride
— 110 g of diatomite "Celite"

were introduced into a stainless steel 5-liter autoclave, in a nitrogen atmosphere.

It was stirred 2 hours at room temperature

It was cooled down to 8°—10°C. 325.1 l of aluminium triethylsesquichloride were then added, keeping the temperature at 8°—10°C for 120 minutes.

The resulting supported complex $TiCl_3 \cdot 1/3\ AlCl_3$ was preactivated by heating to 90°C for 60 minutes.

The n-heptane was removed by decantation and the complex was diluted with 1,250 $cm^3$ of dearomatized n-heptane.

After addition of 299.7 g of n-butyl ether the whole was heated to 90°C for 60 minutes in order to complete the activation of the catalyst.

The product obtained was filtered, washed with n-heptane and dried.

It exhibited the following characteristics:

Composition revealed on analysis:

$$TiCl_3 \cdot (AlCl_3)_{0.125} \cdot (\text{n-butyl ether})_{0.13} \cdot (\text{diatomite})_{47.2\ g}$$

Polymerization test
— 50 l of dearomatized n-heptane
— 16.5 g of the catalyst
— 860 g of aluminium diethylmonochloride in a 10% heptane solution

were introduced into a stainless steel 200-liter autoclave.

It was heated to 70°C and 50 l of propylene were introduced in 3 hours. The unreacted propylene was then vented to the atmosphere.

It was cooled down and the catalytic complex was decomposed by adding 2 l of n-butyl alcohol.

It was heated to 100°C for 1 hour, whereupon it was cooled down, the slurry was transferred to a 400-liter reactor, 50 l of water and 2 g of surfactant were added, and finally it was distilled in a vapour stream to remove the solvent.

The suspension was centrifuged and dried at 60°C.

28.2 kg of a polymer having the following characteristics were obtained.

| | |
|---|---|
| residue to the extraction with heptane | =94.5% |
| apparent density | =0.47 g/$cm^3$ |
| granulometric analysis: | |
| above 840 μ | 0.8% |
| from 420 to 840 μ | 1.7% |
| from 250 to 420 μ | 25.5% |
| from 177 to 250 μ | 50.1% |
| from 149 to 177 μ | 12.0% |
| from 74 to 149 μ | 4.7% |
| below 74 μ | 5.2% |

Example 9
— 1,250 $cm^3$ of dearomatized n-heptane
— 438.6 g of titanium tetrachloride
— 110 g of diatomite "Celite"

were introduced into a stainless steel 5-liter autoclave, in a nitrogen atmosphere.

It was stirred 2 hours at room temperature.

It was cooled down to 8°—10°C. 325.1 g of aluminium triethylsesquichloride were then added, maintaining the temperature at 8°—10°C for 120 minutes.

The resulting supported complex $TiCl_3 \cdot 1/3\ AlCl_3$ was preactivated by heating to 130°C for 15 minutes. The n-heptane was removed by decantation and the complex was diluted with 1,250 $cm^3$ of dearomatized n-heptane.

299.7 g of n-butyl ether were added, and it was heated to 130°C for 15 minutes in order to complete the activation of the catalyst.

The product obtained was filtered, washed with n-heptane and dried.

It exhibited the following characteristics:

Composition revealed on analysis:

$$TiCl_3 \cdot (AlCl_3)_{0.11} \cdot (\text{n-butyl ether})_{0.10} \cdot (\text{diatomite})_{47.5\ g}.$$

Polymerization test
— 50 l of dearomatized n-heptane
— 15.5 g of the catalyst
— 860 g of aluminium diethyl-monochloride in a 10% heptane solution

were introduced into a stainless steel 200-liter autoclave.

It was heated to 70°C and 50 l of propylene were introduced in 3 hours. The unreacted propylene was then vented to the atmosphere. It was cooled down and the catalytic complex was decomposed by adding 2 l of n-butyl alcohol.

It was heated to 100°C for 1 hour. It was cooled down, the slurry was transferred to a 100-liter reactor, 50 l of water and 2 g of surfactant were added, finally it was distilled in a vapour stream in order to remove the solvent.

The suspension was centrifuged and dried at 60°C.

27.9 kg of a polymer having the following characteristics were obtained:

| | |
|---|---|
| residue to the extraction with heptane | =95.1% |
| apparent density | =0.45 g/cm$^3$ |
| granulometric analysis: | |
| above 840 $\mu$ | 1.8% |
| from 420 to 840 $\mu$ | 4.0% |
| from 250 to 420 $\mu$ | 83.4% |
| from 177 to 250 $\mu$ | 8.0% |
| from 149 to 177 $\mu$ | 0.4% |
| from 74 to 149 $\mu$ | 2.0% |
| below 74 $\mu$ | 0.4% |

Example 10
— 1,250 cm$^3$ of dearomatized n-heptane
— 438.6 g of titanium tetrachloride
— 110 g of diatomite "Celite"

were introduced into a stainless steel 5-liter autoclave, in a nitrogen atmosphere.

It was cooled to 8°—10°C, whereupon 325.1 g of aluminium triethylsesquichloride were added, maintaining the temperature at 8°—10°C for 120 minutes.

The resulting supported complex $TiCl_3 . 1/3 AlCl_3$ was preactivated by heating to 120°C for 30 minutes.

The n-heptane was removed by decantation and the complex was diluted with 1,250 cm$^3$ of dearomatized n-heptane.

After addition of 350 g of n-butyl ether it was heated to 120°C for 30 minutes in order to complete the activation of the catalyst.

The product obtained was filtered, washed with n-heptane and dried.

It exhibited the following characteristics:

Composition revealed on analysis:

$$TiCl_3 . (AlCl_3)_{0.09} . (\text{n-butyl ether})_{0.12} . (\text{diatomite})_{47.1\ g}$$

Polymerization test
— 50 l of dearomatized n-heptane
— 18.2 g of the catalyst
— 860 g of aluminium diethyl-monochloride in a 10% heptane solution

were introduced into a stainless steel 200-liter autoclave.

It was heated to 70°C and 50 l of propylene were introduced in 3 hours.

The unreacted propylene was then vented to the atmosphere.

It was cooled down and the catalytic complex was decomposed by adding 2 l of n-butyl alcohol.

It was heated to 100°C for 1 hour.

It was cooled down, the slurry was transferred to a 400-liter reactor, 50 l of water and 2 g of surfactant were added and finally it was distilled in a vapour stream to remove the solvent.

The suspension was centrifuged and dried at 60°C.

26.9 kg of a polymer having the following characteristics were obtained:

| | |
|---|---|
| residue to the extraction with heptane | =94.3% |
| apparent density | =0.46 g/cm$^3$ |
| granulometric analysis: | |
| above 840 $\mu$ | 0.5% |
| from 420 to 840 $\mu$ | 24.8% |

| | |
|---|---|
| from 250 to 420 μ | 55.6% |
| from 177 to 250 μ | 16.1% |
| from 149 to 177 μ | 0.3% |
| from 74 to 149 μ | 2.7% |
| below 74 μ | 0.0% |

Example 11

— 50 l of dearomatized n-heptane
— 16.1 g of the catalyst prepared according to example 7
— 141.3 g of aluminium triisobutyl in a 45% heptane solution complexed with 53.5 g of methyl p-methyl benzoate

were introduced into a stainless steel 200-liter autoclave.

It was heated to 70°C and 50 l of propylene were introduced in 3 hours. The unreacted propylene was then vented to the atmosphere.

It was cooled down and the catalytic complex was decomposed by adding 2 l of n-butyl alcohol.

It was heated to 100°C for 1 hour. It was cooled down, the slurry was transferred to a 400-liter reactor, 50 l of water and 2 g of surfactant were added, finally it was distilled in a vapour stream in order to remove the solvent.

The suspension was centrifuged and dried at 60°C.

29.5 kg of a polymer having the following characteristics were obtained:

| | |
|---|---|
| residue to the extraction with heptane | =94.8% |
| apparent density | =0.44 g/cm$^3$ |
| granulometric analysis: | |
| above 840 μ | 2.2% |
| from 420 to 840 μ | 9.6% |
| from 250 to 420 μ | 48.4% |
| from 177 to 250 μ | 21.0% |
| from 149 to 177 μ | 6.2% |
| from 74 to 149 μ | 4.9% |
| below 74 μ | 7.7% |

Example 12

— 1,250 cm$^3$ of dearomatized n-heptane,
— 490.2 g of titanium tetrachloride,
— 55 g of diatomite "Celite"

were introduced into a stainless steel 5-liter autoclave, in a nitrogen atmosphere.

It was stirred 2 hours at room temperature.

It was cooled down to 8°—10°C. 342 g of aluminium-triethylsesquichloride (reducing agent) were then added, maintaining the temperature at 8°—10°C for 120 minutes. Then it was heated to 120°C for 30 minutes.

The resulting product was filtered, washed with n-heptane and dried.

It exhibited the following characteristics:

Composition revealed on analysis:

$$TiCl_3(AlCl_3)_{0.33} \cdot (diatomite)_{25.1\ g}.$$

Surface area (m$^2$/g): 96.5

Porosity (cm$^3$/g): 0.1200

The X-ray diffraction spectrum, carried out by means of a Debye camera having a 114.6 mm diameter, using the Ni-filtered radiation $C_4K\alpha$, with a 36 kV voltage and a 18 mA current, with an exposure of 15 hours, revealed the presence of crystalline $SiO_2$ and of the crystalline delta form of $TiCl_3$.

— 50 liters of dearomatized n-heptane,
— 30 grams of the above-obtained catalyst component,
— 860 grams of aluminium-diethylmonochloride in a 10% heptane solution

were introduced into a stainless steel 200-liter autoclave.

It was heated to 70°C and 60 l of propylene were introduced in 3 hours. The unreacted propylene was then degassed.

After cooling, the catalytic complex was decomposed by addition of 2 liters of n-butyl alcohol.

It was heated to 100°C for 1 hour. After cooling, the slurry was transferred into a 400-liter reactor, 50 liters of water and 2 grams of surfactant were added, finally it was distilled in a vapour stream to remove the solvent.

The suspension was centrifuged and then dried at 60°C.
25.2 kg of a polymer having the following characteristics were obtained:

| | |
|---|---|
| — residue to the extraction with heptane: | 82% |
| — apparent density: | 0.28 g/cm$^3$ |
| — granulometry: | |
| >840 microns | 1% |
| from 420 to 840 microns | 0.4% |
| from 250 to 420 microns | 50% |
| from 177 to 250 microns | 34% |
| from 149 to 177 microns | 7% |
| from 74 to 149 microns | 6% |
| <74 microns | 1.6% |

Comparative Example 13

— 1,250 cm$^3$ of dearomatised n-heptane,
— 490.2 g of titanium tetrachloride,
— 285 g of diatomite "Celite"

were introduced into a stainless steel 5-liter autoclave, in a nitrogen atmosphere.

It was stirred 2 hours at room temperature.

It was cooled down to 8°—10°C. 342 g of aluminium-triethylsesquichloride (reducing agent) were then added, maintaining the temperature at 8°—10°C for 120 minutes.

The resulting supported complex $(TiCl_3)_3 . AlCl_3$ was preactivated by heating to 120°C for 30 minutes.

The n-heptane was removed by decantation, and the complex was diluted with 1,250 cm$^3$ of dearomatized n-heptane.

240 g of n-butyl ether (complexing agent) were added, and it was heated to 120°C for 30 minutes in order to complete the activation of the catalyst.

The product obtained was filtered, washed with n-heptane and dried.

It exhibited the following characteristics:

Composition revealed on analysis:

$$TiCl_3 . (AlCl_3)_{0.12}(\text{n-butyl ether})_{0.11} . (\text{diatomite})_{125\ g}.$$

Surface area (m$^2$/g): 11.5

Porosity (cm$^3$/g): 0.052.

The X-ray diffraction spectrum, carried out by means of a Debye camera having a 114.6 mm diameter, using the Ni-filtered radiation $C_4K\alpha$, with a 36 kV voltage and a 18 mA current, with an exposure of 15 hours, revealed the presence of crystalline $SiO_2$ and of the crystalline delta form of $TiCl_3$.

— 50 liters of dearomatized n-heptane,
— 30 grams of the catalyst,
— 860 grams of aluminium-diethylmonochloride in a 10% heptane solution

were introduced into a stainless steel 200-liter autoclave.

It was heated to 70°C and 50 liters of propylene were introduced in 3 hours. The unreacted propylene was then vented to the atmosphere.

It was cooled down and the catalytic complex was decomposed by adding 2 liters of n-butyl alcohol.

It was heated to 100°C for 1 hour. It was cooled down, the slurry was transferred to a 400-liter reactor, 50 l of water and 2 g of surfactant were added; finally it was distilled in a vapour stream in order to remove the solvent.

The suspension was centrifuged and dried at 60°C.

20.4 kg of a polymer having the following characteristics were obtained:

— residue to the extraction with heptane: 93.5%
— apparent density: 0.39 g/cm$^3$.

In this comparative example a diatomite amount exceeding the limit indicated in the specification was used.

One may notice that the polymerization yield is decidedly lower than the one of examples 5 to 11, in which ether-activated catalysts were utilized too. In respect of these examples, also the residue to the extraction with heptane is lower, as well as the apparent density.

## Claims

1. Process for preparing a solid catalyst component based on titanium trichloride, useful to stereospecifically polymerize olefins, comprising the following steps:
a) preparing a dispersion of siliceous material of the diatomite type, in a mixture of an inert hydrocarbon solvent and $TiCl_4$;
b) reducing $TiCl_4$, in the presence of the above said siliceous material, to $TiCl_3$ by means of aluminium-organic compounds, at temperatures ranging from −20°C to +20°C;
c) washing with the hydrocarbon solvent, filtering, drying the solid catalyst component so obtained,
and characterized in that a diatomite having a silica content higher than 50% by weight is employed at the rate of 2—100 g/gram-molecule of $TiCl_4$.

2. Process according to claim 1, in which the resulting catalyst component is subjected to a heat treatment at temperatures ranging from 40°C to 150°C, for a time ranging from 10 minutes to 5 hours.

3. Process for preparing a solid catalyst component according to claim 2 wherein the obtained catalyst component is subjected to a heat treatment in the presence of a complexing agent consisting of an aliphatic or aromatic ether, and then to a washing with hydrocarbon solvents in order to remove a substantial portion of the $AlCl_3$ bound to the catalytic component.

4. Process according to claim 3, wherein the ether is used in mixture with hydrocarbon solvent.

5. Process according to claim 3, in which, as complexing agents, aliphatic ethers, of the type R—O—R′, wherein R and R′, like or unlike each other, are methyl, ethyl, n-propyl, isopropyl, n-butyl, sec.-butyl, tert.-butyl, n-amyl, isoamyl, are employed at the rate of 20—200 g/100 g of catalyst component treated.

6. Solid catalyst component for stereospecifically polymerizing olefins, having a surface area comprised between 20 and 100 $m^2/g$, a porosity higher than 0.05 $cm^3/g$, a molar composition $TiCl_3 . 1/3\ AlCl_3$ and supported on a siliceous material of the diatomite type, characterized in that the diatomite has a silica content higher than 50% by weight and is present in amount of 2—100 g/gram-molecule of $TiCl_3$ and in that said catalyst component shows in the X-ray spectrum a diffraction line at 4.13 Å typical of the diatomite support.

7. Solid catalyst component for stereospecifically polymerizing olefins, having the following molar composition:

$$TiCl_3 . (AlCl_3)_{0.005-0.2} . (ether)_{0.01-0.3}$$

supported on a siliceous material of the diatomite type, having furthermore a surface area comprised between 50 and 150 $m^2/g$ and a porosity higher than 0.10 $cm^3/g$ and a crystalline "delta" structure, characterized in that the diatomite has a silica content higher than 50% weight and is present in amount of 2—100 g/gram-molecule of $TiCl_3$ and in that said catalyst component shows in the X-ray spectrum a diffraction line at 4.13 Å typical of the diatomite support.

8. Catalyst for polymerizing olefins, obtained from the combination of an aluminium-organometallic compound with the solid catalyst component of claim 6 or 7.

9. Catalyst for polymerizing olefins according to claim 8, in which the aluminium-metallorganic compound is utilized in the form of a complex with electron-donor compounds.

## Patentansprüche

1. Verfahren zur Herstellung einer festen Katalysatorkomponente auf der Basis von Titantrichlorid für die stereospezifische Polymerisation von Olefinen, umfassend die folgenden Stufen:
a) die Herstellung einer Dispersion eines Silicium-haltigen Materials vom Diatomittyp in einer Mischung von einem inerten Kohlenwasserstofflösungsmittel und $TiCl_4$,
b) die Reduktion von $TiCl_4$ in Gegenwart des vorstehenden Silicium-haltigen Materials zu $TiCl_3$ mit Hilfe von Aluminium-organischen Verbindungen bie Temperaturen im Bereich von −20 bis +20°C,
c) das Waschen mit dem Kohlenwasserstofflösungsmittel, Abfiltrieren und Trocknen der so erhaltenen festen Katalysatorkomponente,
dadurch gekennzeichnet, daß man einen Diatomit mit einem Siliciumdioxidgehalt von höher als 50 Gew.-% in einer Menge von 2—100 g/g-Mol $TiCl_4$ verwendet.

2. Verfahren gemäß Anspruch 1, dadurch gekennzeichnet, daß die erhaltene Katalysatorkomponente einer Wärmebehandlung bei Temperaturen im Bereich von 40 bis 150°C während 10 Minuten bis zu 5 Stunden unterzogen wird.

3. Verfahren zur Hellstellung einer festen Katalysatorkomponente gemäß Anspruch 2, dadurch gekennzeichnet, daß man die erhaltene Katalysatorkomponente einer Wärmebehandlung in Gegenwart eines Komplexierungsmittels, bestehend aus einem aliphatischen oder aromatischen Äther, und danach einem Waschen mit Kohlenwasserstofflösungsmitteln unterzieht, um einen wesentlichen Anteil des an die katalytische Komponente gebundenen $AlCl_3$ zu entfernen.

4. Verfahren gemäß Anspruch 3, dadurch gekennzeichnet, daß der Äther in Mischung mit dem Kohlenwasserstofflösungsmittel verwendet wird.

5. Verfahren gemäß Anspruch 3, dadurch gekennzeichnet, daß man als Komplexierungsmittel aliphatische Äther des Typs R—O—R', worin R und R', die gliech oder verschieden sein können, Methyl, Äthyl, n-Propyl, Isopropyl, n-Butyl, sec.-Butyl, tert-Butyl, n-Amyl, Isoamyl bedeuten, in einer Menge von 20 bis 200 g/100 g der behandelten Katalysatorkomponente verwendet.

6. Feste Katalysatorkomponente zur stereospezifischen Polymerisation von Olefinen mit einer spezifischen Oberfläche zwischen 20 und 100 m²/g, einer Porosität von höher als 0,05 cm³/g, einer molaren Zusammensetzung $TiCl_3 . 1/3\ AlCl_3$ und aufgebracht auf ein Silicium-haltiges Material vom Diatomittyp, dadurch gekennzeichnet, daß der Diatomit einen Siliciumdioxidgehalt von höher als 50 Gew.-% besitzt und in einer Menge von 2—100 g/g-Mol $TiCl_3$ anwesend ist, und daß die Katalysatorkomponente in dem Röntgenspektrum eine Beugungslinie bei 4,13 Å aufweist, die für den Diatomitträger typisch ist.

7. Feste Katalysatorkomponente zur stereospezifischen Polymerisation von Olefinen mit der folgenden molaren Zusammensetzung:

$$TiCl_3 . (AlCl_3)_{0,005-0,2} . (\text{Äther})_{0,01-0,3}$$

aufgebracht auf ein Silicium-haltiges Material vom Diatomittyp, weiterhin aufweisend eine spezifische Oberfläche zwischen 50 und 150 m²/g und eine Porosität von höher als 0,10 cm³/g und eine kristalline "delta"-Struktur, dadurch gekennzeichnet, daß der Diatomit einen Siliciumdioxidgehalt von höher als 50 Gew.-% besitzt und in einer Menge von 2—100 g/g-Mol $TiCl_3$ anwesend ist und daß die Katalysatorkomponente in dem Röntgenspektrum eine Beugungslinie bei 4,13 Å zeigt, die für den Diatomitträger typisch ist.

8. Katalysator zur Polymerisation von Olefinen, erhalten aus der Kombination einer Aluminiumorganometallischen Verbindung mit der festen Katalysatorkomponente gemäß Anspruch 6 oder 7.

9. Katalysator zur Polymerisation von Olefinen gemäß Anspruch 8, dadurch gekennzeichnet, daß die Aluminium-metallorganische Verbindung in Form eines Komplexes mit Elektronendonorverbindungen verwendet wird.

**Revendications**

1.—Procédé de préparation d'un constituant catalytique solide à base de trichlorure de titane convenant à la polymérisation stéréospécifique des oléfines, comprenant les étapes suivantes:

a) préparation d'une dispersion de matière siliceuse de type diatomite, dans un mélange d'un solvant hydrocarboné inerte et de $TiCl_4$;

b) reduction de $TiCl_4$, en présence de la matière siliceuse précitée, en $TiCl_3$ à l'aide de composés organo-aluminium, les températures étant comprises entre −20 et +20°C;

c) lavage à l'aide d'un solvant hydrocarboné, filtration, séchage du constituant catalytique solide ainsi obtenu;

et caractérisé en ce qu'une diatomite ayant une teneur en silice supériere à 50% en poinds est employée en une proportion de 2 à 100 g/molécule-gramme de $TiCl_4$.

2.—Procédé selon la revendication 1, caractérisé en ce que le constituant catalytique résultant est soumis à un traitement thermique à une température comprise entre 40 et 150°C durant 10 minutes à 5 heures.

3.—Procédé de préparation d'un constituant catalytique solide selon la revendication 2, caractérisé en ce que le constituant catalytique obtenu est soumis à un traitement thermique en présence d'un agent complexant consistant en un éther aliphatique ou aromatique, puis est soumis à un lavage par des solvants hydrocarbonés afin d'éliminer une proportion substantielle du $AlCl_3$ lié au constituant catalytique.

4.—Procédé selon la revendication 3, caractérisé en ce que l'éther est utilisé en mélange avec un solvant hydrocarboné.

5.—Procédé selon la revendication 3, caractérisé en ce que comme agents complexants on utilise les éthers aliphatiques, du type R—O—R', dans lequels: R et R', identiques ou différents sont des radicaux methyle, éthyle, n-propyle, isopropyle, n-butyl, sec.-butyle, tert.-butyle, n-amyle, isoamyle, utilisés à raison de 20 à 200 g/100 g de composant catalytique traité.

6.—Constituant catalytique solide pour la polymérisation stéréospécifique des oléfines, présentant une aire superficielle comprise entre 20 et 100 m²/g, une porosité supérieure à 0,05 cm³/g, une composition molaire $TiCl_3$, 1/3 $AlCl_3$ et fixé sur un matériau siliceux de type diatomite, caractérisé en ce que la diatomite présente une teneur en silice supérieure à 50% en poids et est présente en une quantité de 2 à 100 g/molécule-gramme de $TiCl_3$, et en ce que ledit constituant catalytique présente dans son spectre de diffraction aux rayons X, une raie de diffraction de 4,13 Å typique de la diatomite formant le support.

7.—Constituant catalytique solide pour la polymérisation stéréospécifique des oléfines, présentant la composition molaire suivante:

$TiCl_3 . (AlCl_3)_{0,005-0,2} . (ether)_{0,01-0,3}$

supporté sur un matériau siliceux du type diatomite, présentant en outre une surface superficielle comprise entre 50 et 150 $m^2/g$, une porosité supérieure à 0,10 $cm^3/g$ ainsi qu'une structure cristalline de type "delta", caractérisé en ce que la diatomite présente une teneur en silice supérieure à 50% en poids et est présente en une quantité de 2 à 100 g/molécule-gramme de $TiCl_3$ et en ce que le constituant catalytique présente dans son spectre de diffraction aux rayons X, une raie de diffraction de 4,134 Å typique de la diatomite formant le support.

8.—Catalyseur de polymérisation d'oléfines, obtenu par combinaison d'un composé organométallique aluminium avec le constituant catalytique solide des revendications 6 ou 7.

9.—Catalyseur pour la polymérisation d'oléfines selon la revendication 8, caractérisé en ce que le composé organométallique aluminium est utilisé sous la forme d'un complexe avec des composés électro-donneurs.